# EUROPÄISCHE PATENTSCHRIFT

(11) **EP 3 251 794 B1**
(45) Veröffentlichungstag und Bekanntmachung des Hinweises auf die Patenterteilung: **07.07.2021**
(21) Anmeldenummer: 17000824.7
(22) Anmeldetag: 15.05.2017
(51) Int. Cl.: B24B 53/07, B24B 53/075, B23F 23/12

(54) **VERFAHREN ZUM ABRICHTEN EINER MEHRGÄNGIGEN SCHLEIFSCHNECKE MITTELS EINER ABRICHTROLLE**
METHOD OF ALIGNING A MULTI-GEAR GRINDING WORM BY MEANS OF AN ALIGNMENT ROLLER
PROCÉDÉ D'AJUSTEMENT D'UNE MEULE À VIS À PLUSIEURS VITESSES AU MOYEN D'UN ROULEAU D'AJUSTEMENT

(30) Priorität: 31.05.2016 DE 102016006673
(43) Veröffentlichungstag der Anmeldung: 06.12.2017
(73) Patentinhaber: Kapp Werkzeugmaschinen GmbH, 96450 Coburg (DE); NILES Werkzeugmaschinen GmbH, 12681 Berlin (DE)
(72) Erfinder: Müller, Frank, 96484 Meeder (DE)
(74) Vertreter: Gosdin, Michael

(56) Entgegenhaltungen:
- EP-A2- 2 848 348
- DE-A1- 4 339 041
- DE-A1-102008 053 021
- DE-A1-102012 002 126
- GB-A- 1 502 716
- US-A1- 2005 245 176
- US-B2- 9 114 466

## Beschreibung

Die Erfindung betrifft ein Verfahren zum Abrichten einer mehrgängigen Schleifschnecke mittels einer Abrichtrolle, wobei die Schleifschnecke mindestens zwei parallel zueinander verlaufende Schneckengänge aufweist, die sich wendelförmig um eine Schneckenachse erstrecken, und wobei die Abrichtrolle mindestens zwei benachbarte Abrichtprofile aufweist, die entlang einer Abrichtrollenachse angeordnet sind, wobei beim Abrichten der Schleifschnecke die Abrichtprofile der Abrichtrolle simultan durch benachbarte Schneckengänge der Schleifschnecke geführt werden, wobei das Verfahren die Schritte aufweist:
a) Durchführung eines ersten Abricht-Teilprozesses, bei dem die Abrichtprofile der Abrichtrolle simultan durch erste benachbarte Schneckengänge der Schleifschnecke geführt werden;
b) Durchführung mindestens eines zweiten Abricht-Teilprozesses, bei dem die Abrichtprofile der Abrichtrolle simultan durch zweite benachbarte Schneckengänge der Schleifschnecke geführt werden, wobei die zweiten benachbarten Schneckengänge im Vergleich mit Schritt a) in Richtung der Schleifschneckenachse um mindestens einen Schneckengang der Schleifschnecke versetzt sind.

Ein Abrichtverfahren dieser Art ist aus der US 2005/245176 A1 bekannt. Ähnliche und andere Lösungen zeigen die DE 10 2008 053 021 A1**,** die EP 2 848 348 A2**,** die US 9 114 466 B2**,** die DE 43 39 041 A1**,** die DE 10 2012 002 126 A1 und die GB 1 502 716 A.

Bei der Bearbeitung von Verzahnungen, Zykloiden oder Rotorprofilen mit wälzenden Werkzeugen wird in der Regel eine abrichtbare mehrgängige Schleifschnecke eingesetzt. Das Abrichten der Schleifschnecke geschieht wiederum mit einer ein- oder mehrrilligen Abrichtrolle.

Das Abrichten mit einer einrilligen Abrichtrolle (einrilliges Abrichten) erfolgt durch eine Anzahl von Einzelzustellungen mit jeweils einem Bearbeitungshub in jedem Gang und wiederholt sich nach dem Teilen (d. h. nachdem das Profil der Abrichtrolle in den nächsten Gang der mehrgängigen Schleifschnecke eingeführt wurde) in jedem Schneckengang.

Der Einsatz einer mehrrilligen Abrichtrolle verschafft gegenüber einer einrilligen Rolle einen Zeitvorteil, da beim Abrichtvorgang mehrere Gänge (d. h. Lücken) der Schleifschnecke gleichzeitig abgerichtet werden können und so das Teilen in die einzelnen Gänge der Schleifeschnecke reduziert werden kann oder eventuell auch ganz entfallen kann.

Aus Kostengründen wird dabei stets auf ein möglichst zeitoptimiertes Abrichten abgezielt. Wird beispielsweise ein 3-rilliges Abrichtwerkzeug (Abrichtrolle) zur Herstellung einer 3-gängigen Schleifschnecke verwendet, entfällt der Teilvorgang gänzlich, da alle drei Gänge bzw. Lücken der Schleifschnecke gleichzeitig abgerichtet werden können. Ist die Gangzahl größer als die Rilligkeit der Abrichtrolle wird entsprechend oft geteilt, um alle Gänge der Schleifschnecke abrichten zu können.

Ziel des Abrichtens ist es, am Ende eine möglichst fehlerfreie Schleifschnecke zu erhalten, bei der alle Gänge am Umfang exakt gleichmäßig verteilt sind und sich die Gänge untereinander in ihrer Geometrie nicht unterscheiden.

Das Abrichtwerkzeug wird entsprechend so ausgelegt, dass alle Rillen (d. h. alle Abrichtprofile) die gleiche Geometrie am bzw. im Schneckengang erzeugen. Bedingt durch die Auslegung der mehrrilligen Abrichtrolle für einen bestimmten Werkzeugdurchmesser, also bedingt durch die vorhandene feste Geometrie, durch die Fertigungsabweichungen der Abrichtrolle und durch die Tatsache, dass nicht alle Gänge der Schleifschnecke mit derselben Rille (d. h. mit demselben Abrichtprofil) abgerichtet werden, entstehen Geometriefehler in der Schleifschnecke, also im Schleifwerkzeug. Diese Fehler übertragen sich systematisch zuerst auf das Werkzeug und bei der sich anschließenden Schleif-Bearbeitung dann auf das Werkstück.

Das Abrichten geschieht in der Regel nicht achsparallel sondern im Steigungswinkel der Schleifschnecke. Da sich mit kleiner werdendem Durchmesser der Schleifschnecke der Steigungswinkel ändert, verändert sich bedingt durch die feste Geometrie des Abrichtwerkzeuges und dadurch, dass nicht alle Rillen (Abrichtprofile) der Abrichtrolle im Schwenkmittelpunkt der Schleifschnecke stehen, auch die erzeugte Geometrie an der Schleifschnecke.

Dies ist maßgeblich der Grund, weshalb mehrrillige Abrichtwerkzeuge nicht für alle Modulbereiche einer Verzahnung eingesetzt werden können. Ein größerer Modul bedeutet einen größeren Steigungswinkel; somit erzeugen die Rillen der Abrichtrolle, welche nicht im Schwenkpunkt der Schleifschnecke stehen, größere Abweichungen.

Das einrillige Abrichtwerkzeug erreicht stets höhere Qualitäten als das mehrrillige Abrichten, erfordert allerdings auch mehr Zeit für das Abrichten und folglich höhere Kosten.

Der Erfindung liegt die **Aufgabe** zugrunde, ein gattungsgemäßes Verfahren zum Abrichten einer Schleifschnecke vorzuschlagen, mit der die Präzision beim Abrichten verbessert werden kann. Damit soll eine Qualitätssteigerung unter Einhaltung einer möglichst geringen Zeit für das Abrichten möglich werden. Weiterhin wird angestrebt, das Einsatzgebiet vorhandener Abrichtwerkzeuge zu vergrößern und insbesondere auch Schleifschnecken abrichten zu können, die für größere Verzahnungsmodul-Bereiche vorgesehen sind.

Die **Lösung** dieser Aufgabe durch die Erfindung gemäß Anspruch 1 sieht vor, dass eine Abrichtrolle verwendet wird, bei der ein Abrichtprofil mit einem ersten Durchmesser und mindestens ein Abrichtprofil mit einem zweiten Durchmesser benachbart nebeneinander angeordnet sind, wobei der erste Durchmesser größer ist als der zweite Durchmesser, wobei weiterhin die Breite (in Richtung der Abrichtrollenachse) des Abrichtprofils mit zweitem Durchmesser in Richtung der Abrichtrollenachse verglichen mit derjenigen des Abrichtprofils mit erstem Durchmesser vermindert ist.

Auch kann die Form des Abrichtprofils verändert sein. Dies eröffnet die Möglichkeit, auch sehr unterschiedliche Module der zu schleifenden Verzahnung zu realisieren.

Bei der Durchführung des oben genannten Schritts b) werden vorzugsweise die Abrichtprofile der Abrichtrolle simultan durch zweite benachbarte Schneckengänge der Schleifschnecke geführt, wobei die zweiten benachbarten Schneckengänge im Vergleich mit Schritt a) in Richtung der Schleifschneckenachse um genau einen Schneckengang der Schleifschnecke versetzt sind. Allerdings ist es auch möglich, dass besagter Versatz um mehrere Schneckengänge der Schleifschnecke vorgenommen wird.

Nach der Durchführung des obigen Schritts b) kann mindestens ein weiterer Abricht-Teilprozess durchgeführt werden, bei dem die Abrichtprofile der Abrichtrolle simultan durch weitere benachbarte Schneckengänge der Schleifschnecke geführt werden, wobei die weiteren benachbarten Schneckengänge im Vergleich mit obigem Schritt b) in Richtung der Schleifschneckenachse um mindestens einen, vorzugsweise um genau einen, Schneckengang der Schleifschnecke versetzt sind.

Bei der Durchführung der obigen Schritte a) und b) wird bevorzugt bei gleichzeitiger Rotation der Schleifschnecke und der Abrichtrolle um ihre jeweiligen Achsen ein vorgegebener (nämlich konstanter) radialer Abstand zwischen der Schleifschnecke und der Abrichtrolle eingehalten. In diesem Falle ist bevorzugt vorgesehen, dass der radiale Abstand zwischen der Schleifschnecke und der Abrichtrolle bei der Durchführung der obigen Schritte a) und b) gleich groß ist.

Bei der Durchführung der obigen Schritte a) und b) kann ein Verschwenkwinkel zwischen der Schneckenachse und der Abrichtrollenachse eingestellt werden.

Dabei kann vorgesehen werden, dass eine Abrichtrolle verwendet wird, bei der ein Abrichtprofil mit erstem Durchmesser beidseitig von je einem Abrichtprofil mit zweitem Durchmesser flankiert ist.

Der zweite Durchmesser liegt dabei bevorzugt zwischen 99,0 % und 99,9 % des ersten Durchmessers.

Nach der Durchführung des ersten Abricht-Teilprozesses gemäß obigem Schritt a) können weitere Abricht-Teilprozesse gemäß obigem Schritt b) durchgeführt werden, wobei das Abrichtprofil mit dem ersten Durchmesser durch sämtliche Schneckengänge der Schleifschnecke geführt wird.

Das vorgeschlagene Konzept sieht demgemäß die Möglichkeit vor, nach dem eigentlichen Abrichten außerhalb des Eingriffes von Abrichtwerkzeug und Schleifschnecke die Schleifschnecke um eine oder mehrere Teilungen (Gänge) zu verdrehen bzw. zu verschieben, so das beim sich anschließenden nächsten Abrichthub, der bevorzugt ohne gezielte (radiale) Zustellung stattfindet, andere Rillen des Abrichtwerkzeuges mit den Gängen der Schleifschnecke in Eingriff kommen.

Der hierdurch erreichte Vorteil liegt darin, dass Fertigungsfehler der Abrichtrolle oder Fehler, die durch den Abrichtprozess selber entstehen, so auf mehrere oder sogar auf alle Gänge des Schleifwerkzeuges übertragen werden. Dies hat zur Folge, dass die Abweichungen der Gänge untereinander minimiert werden oder eventuell sogar ganz eliminiert werden.

Da in der Regel ein Abrichtvorgang aus einer Reihe von Einzelzustellungen besteht, ergibt sich trotz nachgeschaltetem Verdrehen und der zusätzlichen Abrichthübe ein Zeitvorteil gegenüber dem Abrichten mit einem einrilligen Abrichtwerkzeug. Insgesamt wird das Abrichten damit wirtschaftlicher.

Mehrrillige Abrichtwerkzeuge sind so konzipiert, dass die erzeugten Profile an der Schleifschnecke möglichst identisch sind. Dies kann allerdings theoretisch nur für einen einzigen Schneckendurchmesser bzw. Steigungswinkel passen.

Bei einer Änderung des Schneckendurchmessers ändert sich der Steigungswinkel; hierdurch entstehen Abweichungen bei der erzeugten Schneckengeometrie. Die größten Abweichungen erzeugen die äußersten Rillen der Abrichtrolle (die am weitesten von der Mitte der Abrichtrolle entfernt sind), da diese am weitesten vom Schwenkpunkt der Schleifschnecke entfernt sind. Diese Abweichungen können unter Umständen so groß werden, dass zwar das nachgeschaltete Egalisieren (s. obigen Schritt b) der Schneckengänge für eine gleichmäßige Geometrie aller Gänge sorgt, jedoch die Abweichung zur Sollgeometrie so groß sind, dass das Werkstück nicht in hinreichender Qualität geschliffen werden kann.

In solch einem Falle kann ein Abrichtwerkzeug zum Einsatz kommen, bei dem nur die mittlere Rille bzw. Lücke (d. h. das mittlere Abrichtprofil) die gewünschte Sollgeometrie erzeugt. Alle anderen Rillen (d. h. Abrichtprofile) sind gezielt im Durchmesser zurückgesetzt und gegebenenfalls in der Breite in Richtung der Abrichtrollenachse vermindert und so an den formgebenden Flanken des Abrichtwerkzeugs zurückgesetzt und lassen somit genügend Material stehen, um am Ende des Abrichtens durch das Egalisieren eines jeden Ganges die gewünschte Sollgeometrie zu erzeugen.

Der Nachteil ist hier zwar, dass nun zum Egalisieren jeder Schneckengang nochmals angefahren werden muss. Der Vorteil überwiegt allerdings, dass nun auch großmodulige Schleifschnecken mehrrillig abgerichtet werden können.

Die Erfindung schafft somit eine Lösung auf der Basis eines Lückenversatzes beim mehrrilligen Abrichten eines schneckenförmigen Bearbeitungswerkzeuges mit Standardwerkzeugen (Abrichtrollen) und mit Sonderwerkzeug (s. hierzu das unten genannte Ausführungsbeispiel).

Nach dem eigentlichen Abrichtvorgang der Schleifschnecke mit der Abrichtrolle erfolgt also erfindungsgemäß ein Lückenversatz des Abrichtwerkzeugs in (mindestens) eine nachfolgende Lücke bzw. in einen nachfolgenden Gang der Schleifschnecke. Wenn die Gangzahl der Schleifschnecke größer ist als die Rilligkeit der Abrichtrolle, muss dabei nicht zwingend in den nachfolgenden Gang versetzt werden; es kann in einen oder beliebige nachfolgende Gänge versetzt werden.

Die Erfindung stellt somit eine per Software zu realisierende Lösung bereit, die das Abrichtergebnis beim Einsatz mehrrilliger Abrichtwerkzeuge insbesondere hinsichtlich des Teilungsergebnisses und hinsichtlich der Profilform an einem schneckenförmigen Werkzeug mit mehr als einem Gang verbessert.

Vorgeschlagen ist insofern ein mehrrilliges Abrichten eines schneckenförmigen Werkzeugs, welches vorzugsweise für die Bearbeitung von Verzahnungen, Zykloiden oder Rotorprofilen eingesetzt wird.

In vorteilhafter Weise wird eine Qualitätssteigerung unter Beibehaltung der Zeitersparnis erreicht.

Sehr vorteilhaft ist auch, dass das vorgeschlagene Verfahren auch bei größeren Modulen einsetzbar ist und somit eine Vergrößerung des Einsatzgebietes erreicht wird.

Es ergibt sich somit eine erhebliche Qualitätssteigerung bei nur geringer Zeiteinbuße gegenüber dem bisher üblichen mehrrilligen Abrichten. Insbesondere ist der Einsatz von mehrrilligen Abrichtwerkzeugen auch bei größeren Modulen möglich, da mit dem vorgeschlagenen Verfahren Abweichungen minimiert oder ganz beseitigt werden können

In den Zeichnungen ist ein Ausführungsbeispiel der Erfindung dargestellt. Es zeigen:
- Fig. 1: in der Seitenansicht schematisch eine Schleifschnecke mit großem Durchmesser, die mit einer Abrichtrolle abgerichtet wird,
- Fig. 2: in der Darstellung gemäß Figur 1 eine Schleifschnecke mit kleinem Durchmesser, die mit der Abrichtrolle abgerichtet wird,
- Fig. 3: eine Abrichtrolle gemäß einer ersten Ausführungsform, die nicht beim Verfahren gemäß der Erfindung verwendet wird,
- Fig. 4: eine Abrichtrolle gemäß einer zweiten Ausführungsform, die beim Verfahren gemäß der Erfindung verwendet wird.

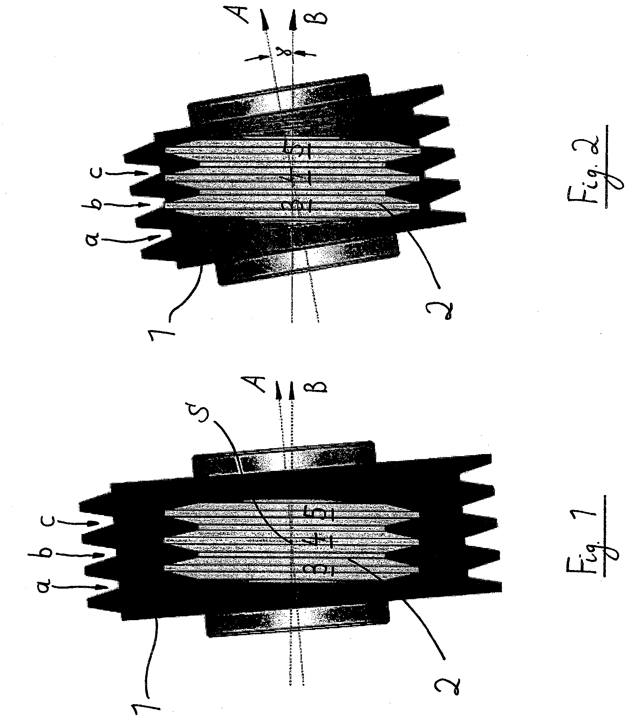

In den Figuren 1 und 2 ist für zwei unterschiedliche Durchmesser einer Schleifschnecke 1 der Abrichtvorgang mittels einer Abrichtrolle 2 illustriert. Die Schleifschnecke 1 ist als mehrgängige Schnecke ausgebildet, so dass sie mehrere Schneckengänge a, b, c, ... aufweist, die sich parallel zueinander wendelförmig um die Schneckenachse A erstrecken.

Das Abrichten wird mittels der Abrichtrolle 2 vorgenommen, die im Ausführungsbeispiel drei nebeneinander angeordnete Abrichtprofile 3, 4 und 5 (Abrichtscheiben) aufweist, die jeweils als scheibenförmige Körper ausgebildet sind. Die drei Abrichtprofile 3, 4, 5 sind dabei benachbart nebeneinander entlang der Abrichtrollenachse B angeordnet.

Wie aus den beiden Figuren 1 und 2 für zwei unterschiedliche Durchmesser der Schleifschnecke 1 entnommen werden kann, schließen die Schneckenachse A und die Abrichtrollenachse B beim Abrichten einen Verschwenkwinkel y ein. In der dargestellten Seitenansicht der Schleifschnecke 1 sowie der Abrichtrolle 2 schneiden sich die Schneckenachse A und die Abrichtrollenachse B in einem Schwenkpunkt S.

Beim Abrichten der Schleifschnecke 1 mittels der Abrichtrolle 2 wird generell so vorgegangen, dass die Abrichtprofile 3, 4, 5 der Abrichtrolle 2 simultan durch die benachbarten Schneckengänge a, b, c, ... der Schleifschnecke 1 geführt werden. Hierbei rotieren sowohl die Schleifschnecke 1 als auch die Abrichtrolle 2 um ihre jeweiligen Achsen A, B.

Wesentlich ist nun, dass zunächst ein erster Abricht-Teilprozesses durchgeführt wird, bei dem die Abrichtprofile 3, 4, 5 der Abrichtrolle 2 simultan durch erste benachbarte Schneckengänge a, b, c der Schleifschnecke 1 geführt werden. Ist dies erfolgt werden Schleifschnecke 1 und Abrichtrolle 2 zunächst außer Eingriff gebracht und anschließend erneut dergestalt in Eingriff gebracht, dass ein zweiter Abricht-Teilprozesses durchgeführt werden kann, bei dem die Abrichtprofile 3, 4, 5 der Abrichtrolle 2 simultan durch zweite benachbarte Schneckengänge b, c, ... der Schleifschnecke 1 geführt werden. Dabei ist vorgesehen, dass die zweiten benachbarten Schneckengänge b, c, ... im Vergleich mit dem ersten Abricht-Teilprozess in Richtung der Schleifschneckenachse A um einen oder mehrere Schneckengänge der Schleifschnecke 1 versetzt sind.

Bei diesem zweiten Abricht-Teilprozess wird derselbe radiale Abstand zwischen Schleifschnecke 1 und Abrichtrolle 2 eingehalten, wodurch die Fehler der Abrichtrolle 2, die sich auf der Schleifschnecke 1 abbilden, minimiert werden.

Wird also beispielsweise bei einer 3-gängigen Schleifschnecke (wie dargestellt) eine 3-rillige Abrichtrolle (wie dargestellt) eingesetzt und am Ende des Abrichtvorganges noch zweimal jeweils um einen Gang weiter geteilt (in Achsrichtung geshiftet) und ein Abrichthub ohne Zustellung durchgeführt, so erhält man ein gleichmäßiges Ergebnis an der Schleifschnecke 1, vergleichbar mit dem Abrichten eines einrilligen Abrichtwerkzeuges. Dennoch wird nicht die Zeit zum Abrichten benötigt, wie sie im Falle einer einrilligen Abrichtrolle benötigt wird.

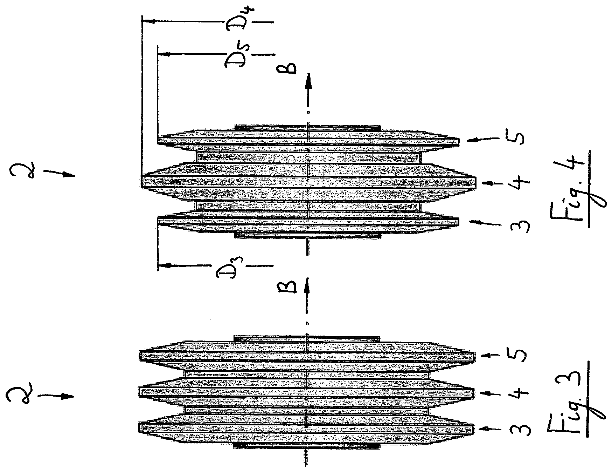

Im Vergleich der beiden Figuren 1 und 2 ist zu erkennen, dass bei kleiner werdendem Durchmesser der Schleifschnecke 1 der Verschwenkwinkel y größer wird. Damit würde ein vergrößerter Geometrie-Fehler auftreten, den die vom Schwenkpunkt S weiter entfernten Abrichtprofile 3 und 5 hervorrufen. Dies würde im Falle dessen auftreten, dass die Abrichtrolle 2 so ausgebildet wird, wie sie in Figur 3 dargestellt ist.

Um dem entgegenzuwirken, kann eine Lösung vorgesehen werden, wie sie in Figur 4 illustriert ist. Hier ist zu erkennen, dass das mittlere Abrichtprofil 4 einen ersten Durchmesser D₄ aufweist, der größer ist als die zweiten Durchmesser D₃ und D₅ der beiden Abrichtprofile 3 und 5, die das Abrichtprofil 4 beidseitig flankieren. Entsprechend kann auch die Breite des Abrichtprofils 3, 5 in Richtung der Abrichtrollenachse B vermindert sein. Die genannte Verminderung des Durchmessers bzw. der Breite liegt dabei in einer solchen Größenordnung, dass bevorzugt zwischen 99,0 % und 99,9 % der jeweiligen Werte des mittleren Abrichtprofils 4 eingenommen werden.

Hiermit wird es möglich, Verzahnungsmodule in einem breiten Bereich zu realisieren, wozu es allerdings dann nötig ist, das Abrichtprofil 4 durch alle Schneckengänge a, b, c, ... der Schleifschnecke 1 zu führen, um den Abrichtvorgang präzise durchzuführen.

### Bezugszeichenliste:

- 1: Schleifschnecke
- 2: Abrichtrolle
- 3: Abrichtprofil (Abrichtscheibe)
- 4: Abrichtprofil (Abrichtscheibe)
- 5: Abrichtprofil (Abrichtscheibe)

- a: erster Schneckengang
- b: zweiter Schneckengang
- c: dritter Schneckengang

- A: Schneckenachse
- B: Abrichtrollenachse

- D₄: erster Durchmesser
- D₃: zweiter Durchmesser
- D₅: zweiter Durchmesser

- y: Verschwenkwinkel

- S: Schwenkpunkt

## Patentansprüche

1. Verfahren zum Abrichten einer mehrgängigen Schleifschnecke (1) mittels einer Abrichtrolle (2),
wobei die Schleifschnecke (1) mindestens zwei parallel zueinander verlaufende Schneckengänge (a, b, c, ...) aufweist, die sich wendelförmig um eine Schneckenachse (A) erstrecken, und
wobei die Abrichtrolle (2) mindestens zwei benachbarte Abrichtprofile (3, 4, 5) aufweist, die entlang einer Abrichtrollenachse (B) angeordnet sind,
wobei beim Abrichten der Schleifschnecke (1) die Abrichtprofile (3, 4, 5) der Abrichtrolle (2) simultan durch benachbarte Schneckengänge (a, b, c, ...) der Schleifschnecke (1) geführt werden,
wobei das Verfahren die Schritte aufweist:
a) Durchführung eines ersten Abricht-Teilprozesses, bei dem die Abrichtprofile (3, 4, 5) der Abrichtrolle (2) simultan durch erste benachbarte Schneckengänge (a, b, c, ...) der Schleifschnecke (1) geführt werden;
b) Durchführung mindestens eines zweiten Abricht-Teilprozesses, bei dem die Abrichtprofile (3, 4, 5) der Abrichtrolle (2) simultan durch zweite benachbarte Schneckengänge (b, c, ...) der Schleifschnecke (1) geführt werden, wobei die zweiten benachbarten Schneckengänge (b, c, ...) im Vergleich mit Schritt a) in Richtung der Schleifschneckenachse (A) um mindestens einen Schneckengang der Schleifschnecke (1) versetzt sind,
**dadurch gekennzeichnet, dass**
eine Abrichtrolle (2) verwendet wird, bei der ein Abrichtprofil (4) mit einem ersten Durchmesser (D₄) und mindestens ein Abrichtprofil (3, 5) mit einem zweiten Durchmesser (D₃, D₅) benachbart nebeneinander angeordnet sind, wobei der erste Durchmesser (D₄) größer ist als der zweite Durchmesser (D₃, D₅), wobei weiterhin die Breite des Abrichtprofils (3, 5) mit zweitem Durchmesser (D₃, D₅) in Richtung der Abrichtrollenachse (B) verglichen mit derjenigen des Abrichtprofils (4) mit erstem Durchmesser (D₄) vermindert ist.

2. Verfahren nach Anspruch 1, **dadurch gekennzeichnet, dass** bei der Durchführung des Schritts b) gemäß Anspruch 1 die Abrichtprofile (3, 4, 5) der Abrichtrolle (2) simultan durch zweite benachbarte Schneckengänge (b, c, ...) der Schleifschnecke (1) geführt werden, wobei die zweiten benachbarten Schneckengänge (b, c, ...) im Vergleich mit Schritt a) in Richtung der Schleifschneckenachse (A) um genau einen Schneckengang der Schleifschnecke (1) versetzt sind.

3. Verfahren nach Anspruch 1 oder 2, **dadurch gekennzeichnet, dass** nach der Durchführung des Schritts b) gemäß Anspruch 1 mindestens ein weiterer Abricht-Teilprozess durchgeführt wird, bei dem die Abrichtprofile (3, 4, 5) der Abrichtrolle (2) simultan durch weitere benachbarte Schneckengänge der Schleifschnecke (1) geführt werden, wobei die weiteren benachbarten Schneckengänge im Vergleich mit Schritt b) gemäß Anspruch 1 in Richtung der Schleifschneckenachse (A) um mindestens einen, vorzugsweise um genau einen, Schneckengang der Schleifschnecke (1) versetzt sind.

4. Verfahren nach einem der Ansprüche 1 bis 3, **dadurch gekennzeichnet, dass** bei der Durchführung der Schritte a) und b) gemäß Anspruch 1 bei gleichzeitiger Rotation der Schleifschnecke (1) und der Abrichtrolle (2) um ihre jeweiligen Achsen (A, B) ein vorgegebener radialer Abstand zwischen der Schleifschnecke (1) und der Abrichtrolle (2) eingehalten wird.

5. Verfahren nach Anspruch 4, **dadurch gekennzeichnet, dass** der radiale Abstand zwischen der Schleifschnecke (1) und der Abrichtrolle (2) bei der Durchführung der Schritte a) und b) gemäß Anspruch 1 gleich groß ist.

6. Verfahren nach einem der Ansprüche 1 bis 5, **dadurch gekennzeichnet, dass** bei der Durchführung der Schritte a) und b) gemäß Anspruch 1 ein Verschwenkwinkel (y) zwischen der Schneckenachse (A) und der Abrichtrollenachse (B) eingestellt wird.

7. Verfahren nach einem der Ansprüche 1 bis 6, **dadurch gekennzeichnet, dass** eine Abrichtrolle (2) verwendet wird, bei der ein Abrichtprofil (4) mit erstem Durchmesser (D₄) beidseitig von je einem Abrichtprofil (3, 5) mit zweitem Durchmesser (D₃, D₅) flankiert ist.

8. Verfahren nach einem der Ansprüche 1 bis 7, **dadurch gekennzeichnet, dass** der zweite Durchmesser (D₃, D₅) zwischen 99,0 % und 99,9 % des ersten Durchmessers (D₄) beträgt.

9. Verfahren nach einem der Ansprüche 1 bis 8, **dadurch gekennzeichnet, dass** nach der Durchführung des ersten Abricht-Teilprozesses gemäß Schritt a) von Anspruch 1 weitere Abricht-Teilprozesse gemäß Schritt b) von Anspruch 1 durchgeführt werden, wobei das Abrichtprofil (4) mit dem ersten Durchmesser (D₄) durch sämtliche Schneckengänge (a, b, c, ...) der Schleifschnecke (1) geführt wird.

## Claims

1. Method for the dressing of a multi-thread grinding worm (1) by means of a dressing roll (2),
wherein the grinding worm (1) has at least two screw channels (a, b, c, ...) which are arranged parallel to another, which screw channels (a, b, c, ...) extend helically around an axis (A) of the grinding worm and
wherein the dressing roll (2) has at least two adjacent dressing profiles (3, 4, 5) which are arranged along an axis (B) of the dressing roll,
wherein the dressing profiles (3, 4, 5) of the dressing roll (2) are guided simultaneously through adjacent screw channels (a, b, c, ...) of the grinding worm (1) during the dressing of the grinding worm (1),
wherein the method comprises the steps:
a) Execution of a first partial dressing process at which the dressing profiles (3, 4, 5) of the dressing roll (2) are guided simultaneously through first adjacent screw channels (a, b, c, ...) of the grinding worm (1);
b) Execution of at least one second partial dressing process at which the dressing profiles (3, 4, 5) of the dressing roll (2) are guided simultaneously through second adjacent screw channels (b, c, ...) of the grinding worm (1), wherein the second adjacent screw channels (b, c, ...) are, compared with step a), offset in the direction of the axis (A) of the grinding worm by at least one screw channel of the grinding worm (1),
**characterized in that**
a dressing roll (2) is used which has a dressing profile (4) with a first diameter (D₄) and at least one dressing profile (3, 5) with a second diameter (D₃, D₅) which are arranged adjacent to another, wherein the first diameter (D₄) is bigger than the second diameter (D₃, D₅), wherein furthermore the width of the dressing profile (3, 5) with the second diameter (D₃, D₅) in the direction of the axis (B) of the dressing roll is, compared with that one of the dressing profile (4) with the first diameter (D₄) is reduced.

2. Method according to claim 1, **characterized in that** at the execution of step b) of claim 1 the dressing profiles (3, 4, 5) of the dressing roll (2) are guided simultaneously through second adjacent screw channels (b, c, ...) of the grinding worm (1), wherein the second adjacent screw channels (b, c, ...) are, compared with step a), offset in the direction of the axis (A) of the grinding worm by exactly one screw channel of the grinding worm (1).

3. Method according to claim 1 or 2, **characterized in that** after the execution of step b) of claim 1 at least one further partial dressing process is carried out at which the dressing profiles (3, 4, 5) of the dressing roll (2) are guided simultaneously through further adjacent screw channels of the grinding worm (1), wherein the further adjacent screw channels are, compared with step b) of claim 1, offset in the direction of the axis (A) of the grinding worm by at least one, preferably by exactly one screw channel of the grinding worm (1).

4. Method according to one of claims 1 to 3, **characterized in that** at the execution of steps a) and b) of claim 1 at simultaneous rotation of the grinding worm (1) and of the dressing roll (2) around their respective axes (A, B) a predetermined radial distance is kept between the grinding worm (1) and the dressing roll (2).

5. Method according to claim 4, **characterized in that** the radial distance between the grinding worm (1) and the dressing roll (2) is equal at the execution of steps a) and b) of claim 1.

6. Method according to one of claims 1 to 5, **characterized in that** at the execution of steps a) and b) of claim 1 a pivoting angle (y) is set between the axis (A) of the grinding worm and the axis (B) of the dressing roll.

7. Method according to one of claims 1 to 6, **characterized in that** a dressing roll (2) is used which has a dressing profile (4) with first diameter (D₄) which is flanked on both sides by one dressing profile (3, 5) with second diameter (D₃, D₅).

8. Method according to one of claims 1 to 7, **characterized in that** the second diameter (D₃, D₅) is between 99.0 % and 99.9 % of the first diameter (D₄).

9. Method according to one of claims 1 to 8, **characterized in that** after the execution of the first partial dressing process according step a) of claim 1 further partial dressing processes according step b) of claim 1 are carried out, wherein the dressing profile (4) with the first diameter (D₄) is guided out through all screw channels (a, b, c, ...) of the grinding worm (1).

## Revendications

1. Procédé de dressage d'une vis sans fin de meulage (1) à plusieurs filets au moyen d'une molette de dressage (2),
la vis sans fin de meulage (1) comprenant au moins deux filets de vis sans fin (a, b, c, ...) s'étendant parallèlement les uns aux autres, lesquels s'étendent de manière hélicoïdale autour d'un axe de vis sans fin (A), et
la molette de dressage (2) comprenant au moins deux profils de dressage (3, 4, 5) adjacents, lesquels sont disposés le long d'un axe de molette de dressage (B), les profils de dressage (3, 4, 5) de la molette de dressage (2) étant guidés simultanément par des filets (a, b, c, ...) adjacents de la vis sans fin de meulage (1) lors du dressage de la vis sans fin de meulage (1), le procédé comprenant les étapes suivantes :
a) mise en œuvre d'un premier processus partiel de dressage, dans lequel les profils de dressage (3, 4, 5) de la molette dressage (2) sont guidés simultanément par des premiers filets (a, b, c, ...) adjacents de la vis sans fin de meulage (1) ;
b) mise en œuvre d'au moins un deuxième processus partiel de dressage, dans lequel les profils de dressage (3, 4, 5) de la molette dressage (2) sont guidés simultanément par des deuxièmes filets (b, c, ...) adjacents de la vis sans fin de meulage (1), les deuxièmes filets de vis sans fin (b, c, ...) adjacents étant, par comparaison avec l'étape a), décalés dans la direction de l'axe de vis sans fin de meulage (A) d'au moins un filet de la vis sans fin de meulage (1),
**caractérisé en ce**
**qu'**une molette de dressage (2) est utilisée, dans laquelle un profil de dressage (4) présentant un premier diamètre (D₄) et au moins un profil de dressage (3, 5) présentant un deuxième diamètre (D₃, D₅) sont disposés les uns à côté des autres de manière adjacente, le premier diamètre (D₄) étant supérieur au deuxième diamètre (D₃, D₅), la largeur du profil de dressage (3, 5) présentant le deuxième diamètre (D₃, D₅) étant en outre réduite dans la direction de l'axe de molette de dressage (B) par comparaison avec celle du profil de dressage (4) présentant le premier diamètre (D₄).

2. Procédé selon la revendication 1, **caractérisé en ce que** lors de la mise en œuvre de l'étape b) selon la revendication 1 les profils de dressage (3, 4, 5) de la molette de dressage (2) sont guidés simultanément par des deuxièmes filets (b, c, ...) adjacents de la vis sans fin de meulage (1), les deuxièmes filets de vis sans fin (b, c, ...) adjacents étant, par comparaison avec l'étape a), décalés dans la direction de l'axe de vis sans fin de meulage (A) d'exactement un filet de la vis sans fin de meulage (1).

3. Procédé selon la revendication 1 ou 2, **caractérisé en ce qu'**après la mise en œuvre de l'étape b) selon la revendication 1 au moins un autre processus partiel de dressage est mis en œuvre, dans lequel les profils de dressage (3, 4, 5) de la molette de dressage (2) sont guidés simultanément par d'autres filets adjacents de la vis sans fin de meulage (1), les autres filets de vis sans fin adjacents étant, par comparaison avec l'étape b) selon la revendication 1, décalés dans la direction de l'axe de vis sans fin de meulage (A) d'au moins un, de préférence d'exactement un, filet de la vis sans fin de meulage (1).

4. Procédé selon l'une des revendications 1 à 3, **caractérisé en ce que** lors de la mise en œuvre des étapes a) et b) selon la revendication 1, dans le cas d'une rotation simultanée de la vis sans fin de meulage (1) et de la molette de dressage (2) autour de leurs axes respectifs (A, B), une distance radiale prédéfinie entre la vis sans fin de meulage (1) et la molette de dressage (2) est maintenue.

5. Procédé selon la revendication 4, **caractérisé en ce que** la distance radiale entre la vis sans fin de meulage (1) et la molette de dressage (2) est identique lors de la mise en œuvre des étapes a) et b) selon la revendication 1.

6. Procédé selon l'une des revendications 1 à 5, **caractérisé en ce que** lors de la mise en œuvre des étapes a) et b) selon la revendication 1 un angle de pivotement (γ) entre l'axe de vis sans fin (A) et l'axe de molette de dressage (B) est réglé.

7. Procédé selon l'une des revendications 1 à 6, **caractérisé en ce qu'**une molette de dressage (2) est utilisée, dans laquelle un profil de dressage (4) présentant un premier diamètre (D₄) est flanqué, des deux côtés, d'un profil de dressage (3, 5) respectif présentant un deuxième diamètre (D₃, D₅).

8. Procédé selon l'une des revendications 1 à 7, **caractérisé en ce que** le deuxième diamètre (D₃, D₅) est compris entre 99,0 % et 99,9 % du premier diamètre (D₄).

9. Procédé selon l'une des revendications 1 bis 8, **caractérisé en ce qu'**après la mise en œuvre du premier processus partiel de dressage selon l'étape a) de la revendication 1 d'autres processus partiels de dressage selon l'étape b) de la revendication 1 sont mis en œuvre, le profil de dressage (4) présentant le premier diamètre (D₄) étant guidé par tous les filets (a, b, c, ...) de la vis sans fin de meulage (1).
